Europäisches Patentamt

(19) European Patent Office

Office européen des brevets

(11) Publication number : **0 047 056 B2**

(12) NEW EUROPEAN PATENT SPECIFICATION

(45) Date of publication of the new patent specification : **02.05.91 Bulletin 91/18**

(21) Application number : **81303240.6**

(22) Date of filing : **15.07.81**

(51) Int. Cl.⁵ : **B21D 43/05**

(54) **Power press arrangement.**

(30) Priority : **29.08.80 US 182754**

(43) Date of publication of application :
**10.03.82 Bulletin 82/10**

(45) Publication of the grant of the patent :
**02.04.86 Bulletin 86/14**

(45) Mention of the opposition decision :
**02.05.91 Bulletin 91/18**

(84) Designated Contracting States :
**DE FR GB IT**

(56) References cited :
**DE-A- 2 218 966**
**DE-A- 2 747 237**
**FR-A- 2 267 199**
**GB-A- 2 006 077**

(56) References cited :
**US-A- 3 199 443**
**US-A- 3 553 547**
**US-A- 3 668 498**
**US-A- 3 728 597**
**Oxford English Dictionary, Vol. IIC, Seite 1016**

(73) Proprietor : **DANLY MACHINE CORPORATION**
**2100 South Laramie Avenue**
**Chicago Illinois 60650 (US)**

(72) Inventor : **Heiberger, Francis E.**
**760 South Saylor Avenue**
**Elmhurst Illinois (US)**
Inventor : **Tack, Carl E.,Jr.**
**421 Dorset Place**
**Glen Ellyn Illinois (US)**

(74) Representative : **Knott, Stephen Gilbert et al**
**MATHISEN, MACARA & CO. The Coach House**
**6-8 Swakeleys Road**
**Ickenham Uxbridge Middlesex UB10 8BZ (GB)**

EP 0 047 056 B2

## Description

This invention relates generally to power presses and more particularly concerns a control system synchronized therewith for intervening auxiliary mechanisms such as loaders, unloaders and conveyors.

In synchronized press lines there are intermediate mechanisms for transferring work pieces from one press to another. Such transfer mechanisms include loaders for loading workpieces into the working areas of the presses and unloaders for removing the workpieces after a press operation. Other devices include conveyors for moving workpieces between presses and turnover mechanisms for reorienting a workpiece after one press operation prior to a subsequent press operation.

As shown in US-A-3,199,443 the drives for power presses may be centrally synchronized and the various transfer mechanisms operated by cams associated with the individual presses. A difficulty with cam operated transfer mechanisms is a long engineering and design lead time for development of the cams. Several months are required from the time at which the transfer mechanism cams are engineered until the cams are available for actual use on a press. In addition, while there are difficulties in original cam design, the redesign of cams for an existing transfer mechanism drive (in order to change the transfer mechanism motion) is more difficult.

Considerable work is also required to retrofit cam transfer mechanisms onto an existing press. It is also difficult to utilize a cam driven transfer mechanism arrangement on a below-floor type of press.

Microprocessor-based controls for transfer mechanisms are known, as are numerically controlled drives for such mechanisms. Typically such controls for transfer mechanisms are programmed for transfer mechanism motion independent of the operation of the associated press, although some press position information might be utilized such as to set limit conditions for the extreme position of a loader or unloader mechanism.

A workpiece conveyor device is shown in GB-A-2 066 077 for moving workpieces between two presses of an automated press line. A CNC control system controls the operation of the conveyor and has position regulators associated with actuating drives for the various required movements of the conveyor device. The CNC control includes comparators which compare stored desired values with data input from the actuating drives relating to the speed of operation and position of the drives to control their operation. The only interaction of the actuating drives with the press itself is by means of a release stage which is set by a signal from a specific crankshaft angle of the press. There is no further synchronization of the conveyor device with the press.

US-A-3668498 discloses a power press having a slide, a press drive for driving the slide in a press cycle and a working area. A workpiece displacing mechanism has a control unit and an element for moving a workpiece during a press cycle relative to the working area of the press in response to operation of the control unit. Means produce a timing signal representing successive increments of each press cycle and a monitor monitors the motion of the workpiece moving element. A memory is provided which stores data relating to desired successive positions for the workpiece moving element during a press cycle. The motion of the workpiece moving element between successive desired positions of the element is not monitored and the system is provided which ensures that the element is at a desired position before issuing a signal moving the element to the next successive position.

Regarding the state of the art according to US-A-3 668 498 the present invention is directed towards solving the technical problem of substantially coordinating the motion of the transfer mechanisms with the press operation in the case of an automated power press line. It is further desirable to accomplish this in such a manner as to avoid the long engineering lead times associated therewith.

According to the present invention, there is provided a power press arrangement comprising a power press having a slide, a press drive for driving the slide in a press cycle, a working area, a workpiece displacing mechanism having a control unit and an element for moving a workpiece during a press cycle relative to the working area of the press in response to operation of the control unit, means for producing a timing signal representing successive increments of each press cycle, and a monitor for monitoring the motion of the workpiece-moving element, a memory which stores data relating to desired successive positions for the workpiece-moving element during a press cycle, characterised in that the control unit includes a calculator for deriving, during each press cylce, from the data stored in th memory, theoretical motion parameters for the workpiece-moving element between successive desired positions, and a comparator compares the theoretical motion derived by the calculator with the motion monitored by the monitor and causes the control unit to move the workpiece-moving element in dependence upon the results produced by the comparator, the memory correlating the output of said stored data relating to desired positions for the workpiece-moving element within a press cycle with different positions of the press drive and its associated slide so as to closely correlate the movement of the workpiece-moving element with the motion of the press drive.

According to the present invention there is additionally provided a method of synchronizing the operation of auxiliary apparatus including loaders, unloaders and conveyors with each of the press drives of a line of successive power presses comprising the steps of deriving a set of auxiliary apparatus position values for a cycle of a press drive, driving the press, continuously monitoring the position of the auxiliary apparatus and displacing the auxiliary apparatus in theoretical positions based upon the deviation between theoretical and actual auxiliary apparatus position values, characterised in that the position of the press drive is incrementally determined and correlated with the derived auxiliary apparatus positions incrementally to determine the theoretical auxiliary positions, and in that the auxiliary apparatus position values are incremental.

A power press arrangement embodying the invention will now be described, by way of example, with reference to the accompanying diagrammatic drawings in which :

Figure 1 is a side elevation, partially diagrammatic, showing a portion of a press line with transfer mechanisms controlled in accordance with the present invention ;

Figure 1a is a block diagram of a computer and servo interconnections for a transfer mechanism control system in accordance with the present invention ;

Figure 2 is a top view of one of the presses and associated transfer mechanisms of Figure 1 ;

Figure 3 is an end view of an unloader mechanism of Figure 1 taken along the line 3-3 and in the direction of the arrows ;

Figure 4 is a side view of the unloader mechanism of Figure 3 taken along the lines 4-4 and in the direction of the arrows ;

Figure 5 is a top view, partially in section, of a portion of the unloader mechanism of Figure 4 taken along the line 5-5 and in the direction of the arrows ;

Figure 6 is a top view, partially in section, of another portion of the unloader of Figure 1, taken along the line 6-6 and in the direction of the arrows ;

Figure 7 is an illustration of a control panel for the transfer mechanism control system ;

Figure 8 is a simplified flow diagram of the operation of the computer of the control system ;

Figure 9 is an illustration of an input data table used by the computer ;

Figure 10 is a simplified flow diagram of the basic routine for loading transfer mechanism position information into the computer memory ;

Figures 11 to 16 are flow diagrams of the computer operation for preparing for a load routine for position information relative to each of the six axes of transfer mechanisms ;

Figure 17 is an illustration of a motion path table for use by the computer of the control system ;

Figure 18 is a flow diagram of the load routine for loading information into the motion path table ;

Figure 19 is a flow diagram of the dwell subroutine used in association with the load routine of Figure 18 ;

Figure 20 is a flow diagram similar to that of Figure 19 for normal motion for a segment of the motion path table ; and

Figure 21 is a flow diagram similar to that of Figure 20 for skewed motion.

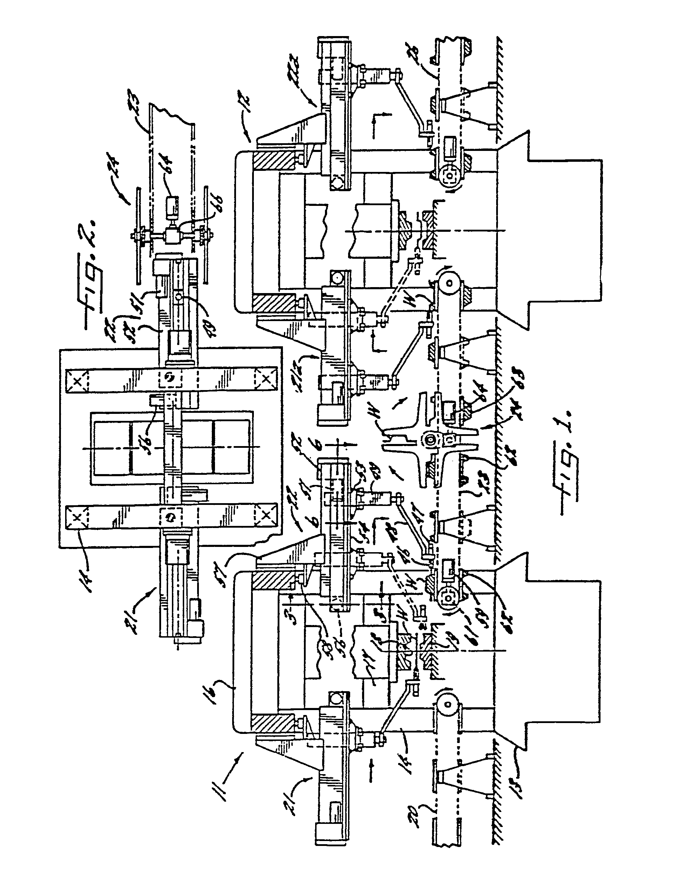

Referring initially to Figure 1, an automated press line 10 includes a pair of power presses 11 and 12. Each press is shown substantially identical to the other, although this is not necessary in practicing the invention. Similarly, although two exemplary presses 11 and 12 are shown, any number of presses may be incorporated into the automated press line 10.

The press 11 includes a base 13 and an upstanding frame 14 topped by a crown 16. A slide 17 is received for reciprocation in the frame 16 and carries an upper die 18. A lower die 19 is positioned to cooperate with the upper die 18 as it reproduces in the frame 14 to form workpieces W in the operation of the press 11. The press 11 may be a conventional overdrive or under-drive press. Typically such drives are eccentric drives actuated by a motor which, through the eccentric mechanism, effects one complete reciprocation of the slide 17 in one complete 360° rotation of the motor shaft. Details of such conventional press drive systems have been omitted from the Figures in order to enhance the clarity of the description of the auxiliary equipment associated with the presses.

Associated with the press 11 is a loader 21 for removing work-pieces from a conveyor 20 and for moving the work-pieces into the working area of the press between the upper and lower dies 18 and 19. Also associated with the press 11 is an unloader mechanism 22 which removes the workpieces W after the press operation and placed them on a conveyor 23. Also associated with the press 11 is a turnover device 24 for the workpiece W which is operated in conjunction with the output conveyor 23.

Associated with the press 12 are a loader 21a substantially structurally identical to the loader 21 and an unloader 22a substantially structurally identical to the unloader 22. The conveyor 23 serves as the input conveyor for the press 12, and the press 12 has an associated output conveyor 26. As indicated previously, the press 12 may be identical to the press 11 ; or it may be of a different type, depending upon the operation to be performed on the workpieces by the press.

In the illustrated press line, each press controls two axes of movement of the loader, two axes of movement of the unloader, the movement of the output conveyor, and the rotation of the turnover mechanism along the output conveyor. Before considering the structure and operation of these auxiliary devices in greater detail, the control system for the devices shall be briefly described. With reference to Figure 1a, a computer 30 produces control signals for each of six servodrive amplifiers ; one for each axis of the loader and unloader, one for the output conveyor, and one for the turnover mechanism. For example, for the press 11 a computer control signal is produced for each of the two loader servos, two unloader servos, the conveyor servo and the turnover servo. In the illustrated press line, the servo-drive amplifiers receive an analog signal which is produced by the computer 30 through a digital to analog conversion. Each of the servodrive amplifiers drives one of the servo-motors, which servo-motors are designated collectively 32 to 37.

The digital computer 30 receives position information from a press drive position sensor 38, which constantly monitors the angular position of the press drive motor shaft. Based upon this position information for the press drive, and consequently for the press slide, the computer 30 derives desired position servo-signals for the servo-drive amplifiers. In the present instance, a table is prepared during the set-up operation of the computer with the desired positions for each of the auxiliary device axes written into a table which coordinates these positions with press drive positions. During normal operation of the press, the computer 30 derives intermediate position values for the servo-drive amplifier signals based upon the table values.

In order to complete each of the servo loops with the drive motors 32 to 37, an axis position sensor is associated with each of the servo-drive motors, and these axis position sensors continuously feed back position information for the servo drives to the computer 30. The computer compares the calculated axis positions derived from the press position tables with the actual axis positions to continuously update the servo-drive amplifier input signals.

The computer 30 is operable to activate the opening and closing of the jaw cylinders associated with the loader and unloader mechanisms. The jaw cylinders, illustrated jointly as 45, are each activatable by an appropriate signal at the desired point in the press drive cycle. The computer 30 also receives conventional supply voltages from power supplies 41, and interacts on a bus 42 with a control panel 43. The control panel includes means for entering desired axis positions into the computer, and displays for indicating positions of devices and of the press drive during operation. Illustrative flow charts for representative operations of the computer 30 shall be discussed in more detail hereinafter. The computer routines will be discussed in co-ordination with the computer's interreaction with the sensors 38 and 39 and the control panel 43. In addition, an illustrative control panel 43, and the functions of the component parts thereof, shall also be discussed in more detail.

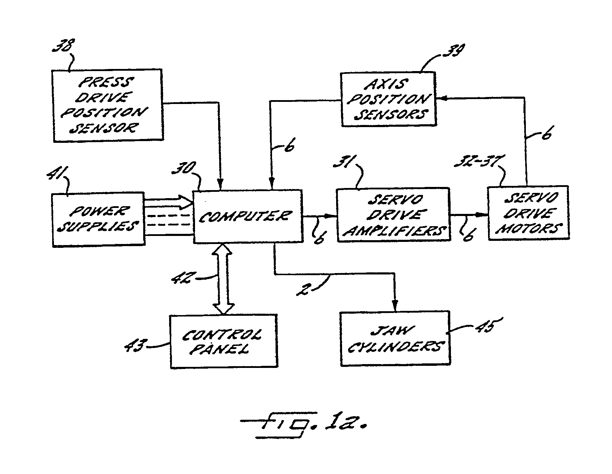

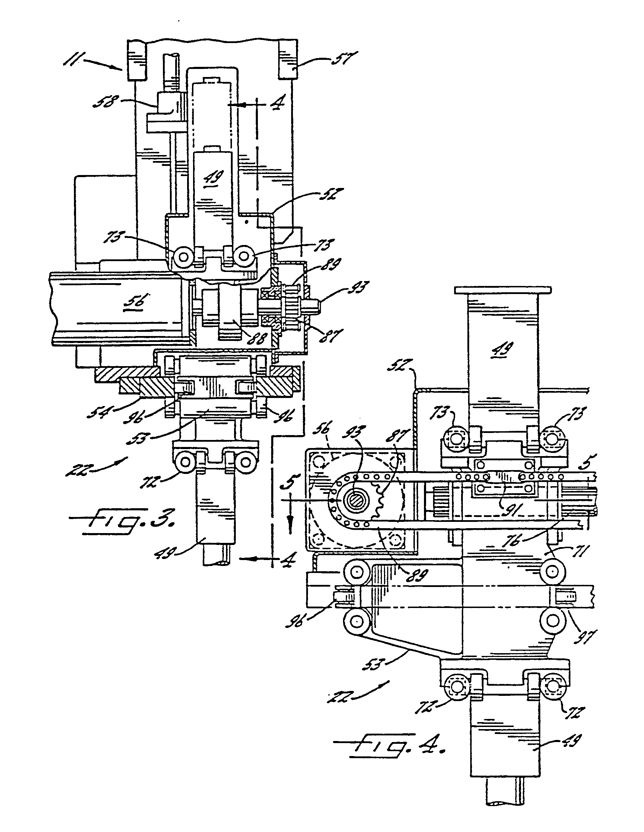

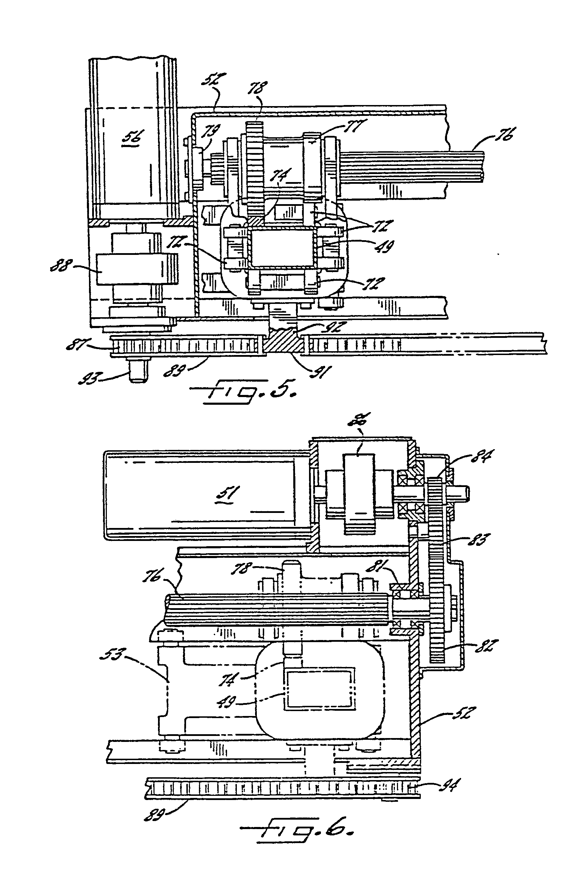

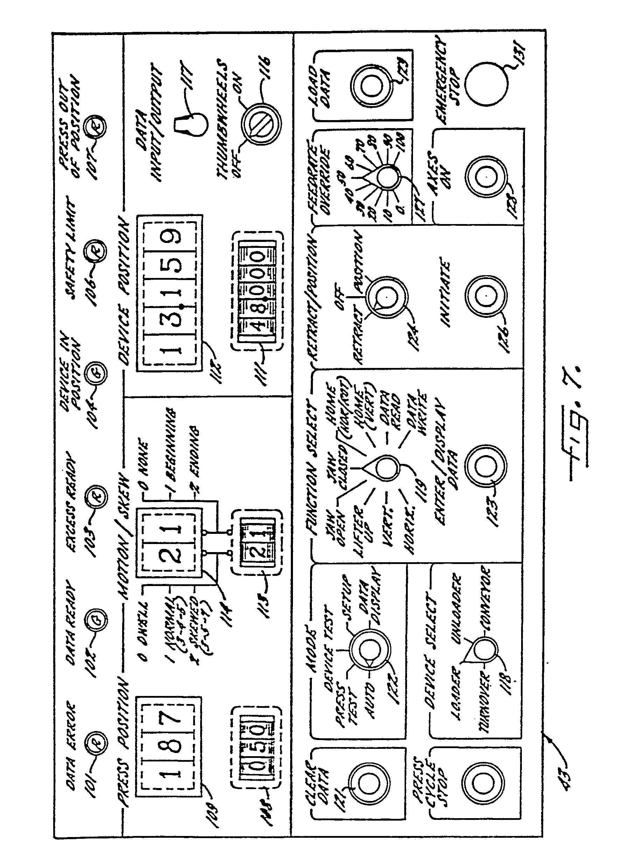

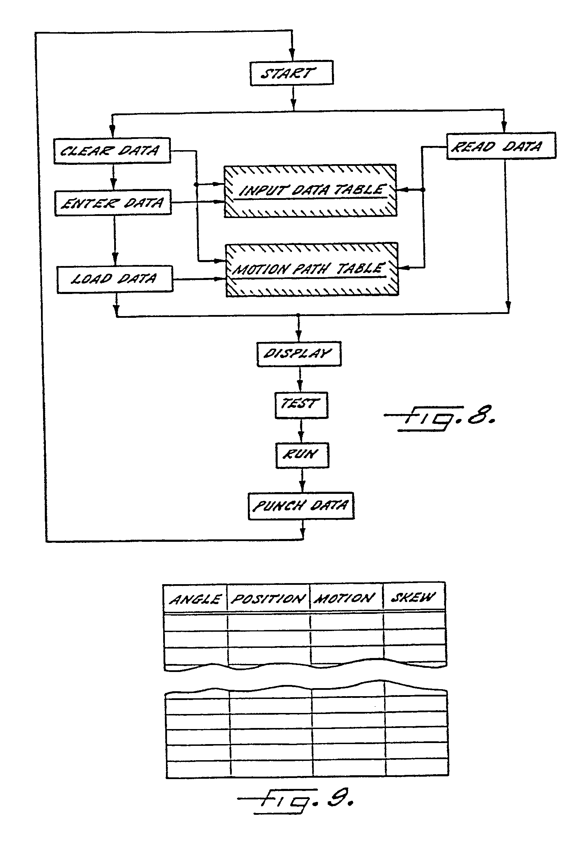

Returning to Figures 1 to 6, the mechanical operation of the auxiliary apparatus for the press 11 will be discussed in further detail. In the mechanical illustrations of the transfer mechanisms of Figure 1 to 6, the servo-drive motors 32 to 37 are shown together with their mechanical couplings to the transfer mechanism. The various position sensors for feeding back motor shaft position to the computer and the servo-drive amplifiers coupling drive voltages to the servo-drive motors are not shown. Nor are the computer 30 or control panel 43 shown in the Figures 1 to 6. In the exemplary embodiment, one computer and associated amplifiers, press drive position sensor, etc. are associated with each press such as 11 or 12. With initial reference to Figures 1 and 2, the unloader arrangement 22 includes a pair of jaws 46 actuable to be opened and closed by an air cylinder 47. The jaws 46 and the air cylinder 47 are mounted at the lower end of an arm 48, the upper end of which is attached to the bottom of a post 49. The arm 48 and jaws 46 on the post 49 are driven vertically by a vertical axis servo motor 51 relative to a support bracket 52.

In order to move the jaws 46 and arm 48 horizontally, the post 49 is received in a post container mounted on a trolley 53 which is movable on tracks 54 on the base of the support bracket 52. A horizontal axis servo drive motor 56 mounted on the bracket 52 drives the trolley 53 by means of a chain drive arrangement, which shall be described hereinafter. The post 49, which extends above the trolley 53, is free in its horizontal travel to pass through an opening in a bracket support 57 so that the pair of jaws 46 may be moved into and out of the working area of the press 11. The support 57 is slidably mounted on the side frame of the press 11 and is, prior to the operation of the unloader 22, adjustable by a height adjustment 58. Adjusting the height of the support 57 adjust the vertical height of the support bracket 52 in order to position the jaws 46 at the proper height for a particular press set up.

The loader apparatus 21 is substantially mechanically identical to the unloader 22, and therefore shall not be described in detail. Like the unloader 22, the loader 21 is operable to move a pair of jaws in the x (horizontal) and z (vertical) directions. Together the axes of the loader 21 and the unloader 22 comprise four of the six axes controlled by the computer 30 associated with the press 11. The fifth axis is the drive for the conveyor 23 at the output of the press 11, which also serves as the input conveyor for the press 12. A conveyor motor 59 drives the conveyor 23 through a drive mechanism 61. The conveyor 23 includes flights 62 and 63 of opposite contours for receiving the workpieces W as formed by the press 11.

The turnover mechanism 24 inverts the workpieces W so that they are re-oriented and transferred from the type of flight 63 to flight 62, properly positioned to be received into the press 12. The sixth axis controlled by the computer 30 is the turnover mechanism drive comprising a turnover drive motor 64 driving the turnover mechanism through a gear box 66. The mechanism for a suitable turnover device is shown in US-A-3,342,125. In the present instance, the angular position of the motor drive axis is monitored by an axis position sensor and coupled to the computer 30, and the motor is a servo-drive motor responsive to a servo signal provided by the computer 30.

A typical unloader 22, which as mentioned previously is substantially mechanically identical to a typical loader such as 21, shall now be described in further detail. With particular reference to Figures 3 to 6, the post 49 carrying the jaw arm 48 is received for vertical movement in a post container 71. The post 49 is positioned in the post container 71 by a group of lower rollers 72 and a group of upper rollers 73. In order to drive the post 49 vertically relative to the post container 72, a vertical rack 74 is attached along one side of the post. The vertical motor 51 drives a spline shaft 76 to effect the raising the lowering of the post 49. The spline shaft 76 rotatably drives a clutch assembly 77 which is slidably mounted on the spline shaft for horizontal translation relative thereto. Rotation of the spline shaft 76 rotates the clutch assembly 77 and a gear 78 carried thereon which engages the rack 74. Rotation of the gear 78 raises and lowers the rack 74 and the attached post 49. The spline shaft 76 is rotatably mounted in the fixed frame 52. The spline shaft 76 is rotatably mounted at one end in a bearing 79 and at the other end is rotatably mounted in a bearing arrangement 81 and driven by a gear 82, which is a portion of a gear reduction assembly also including gears 83 and 84. The gear 84 is rotatably driven by the vertical motor 51 through a clutch 86.

The post 49, post housing 71, clutch assembly 77, and roller assemblies 72 and 73 are free to move horizontally as driven by the horizontal motor 56. The horizontal motor 56 drives a sprocket 87 through a clutch assembly 88. The sprocket 87 drives a chain 89, joined at its ends by a T-shaped bar 91 having a stem portion 92 attached to the post container 71. The sprocket 87 is rotatably mounted on a shaft 93 which is fixed on the stationary bracket 52. The other end of the chain is mounted on a sprocket rotatably mounted on a shaft 94 which is likewise fixed to the bracket 52. As the chain 89 is rotated by the horizontal motor 56, the link 91 and attached post container 71, carrying the vertically movable post 49, are translated horizontally. The lower portion of the post container 71 forms the trolley 53 which carries roller assemblies 96 and 97 which run on rails 54 for horizontal movement of the post container 71.

As can be seen, the combined horizontal and vertical motion imparted to the post 49 permits two-dimensional manoeuvrability of the unloader arm 48 carrying the jaws 46. By suitably programming the operation of the horizontal motor 56 and the vertical motor 51 the two axes of the unloader 22 may be controlled to co-operate with a particular press operation to remove formed work pieces from the press 11. As indicated previously, the corresponding two axes for the loader 21 may be similarly controlled as may the conveyor motor 59 and the turnover apparatus motor 64. In addition the "open-close" command signals for the air cylinders operating the jaws for the loader and unloader are provided by the computer at the programmed press drive positions.

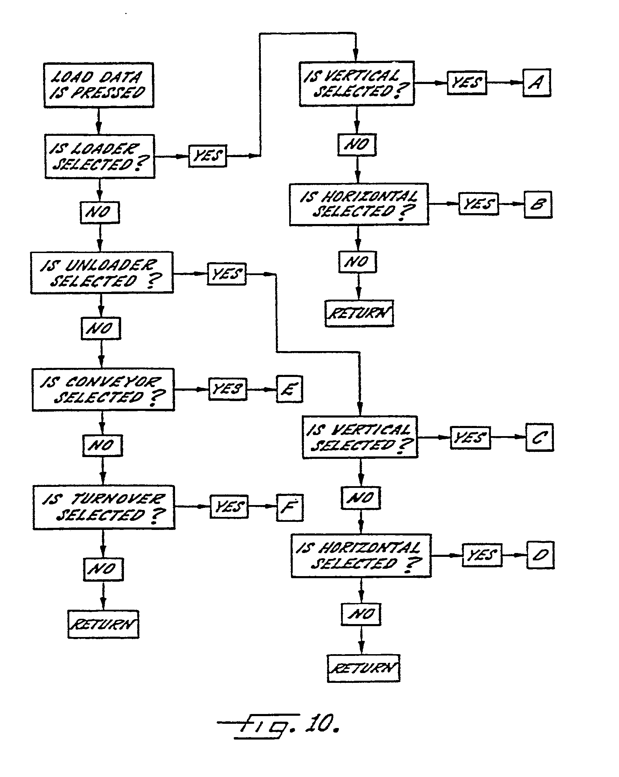

Referring now to Figure 7, an exemplary control panel 43 for entering and displaying transfer mechanism control information to and from the computer 30 shall be described in detail. The various controls and indicators on the control panel are primarily used for the entry of axis position information to the computer 30 and for display of position information for the various axes, such as during operation of the press and transfer mechanisms. Following the description of the control panel 43, exemplary data entry and operation flow charts for the computer 30 shall be discussed, with reference to the control panel as discussed hereinbelow.

Across the top of the control panel 43 are six warning lights. A data error light 101 indicates that invalid or out-of-tolerance data, such as an impossible unloader x axis position, has been entered. A data ready light 102 indicates the completion of processing of entered data, such as processing axis data into tabular form for subsequent operation of the press control system. An excess error light 103 indicates that one of the devices associated with one of the six axes has fallen outside of its tolerance limit of path error during press operation.

A device in position light 109 indicates when a device is in its synchronised or retracted position. A safety limit light 106 indicates that one of the devices on a controlled axis has reached a safety limit position during operation. A press out of position light 107 indicates that the press and the controlled devices are out of synchronization with one another.

Below the row of indicator lights are a group of data entry and display devices for entering transfer device axis positions relative to press angular positions. Included among the controls and displays are thumbwheel arrangements 108 for press position, 113 for motion and skew, and 111 for device position. The device position thumbwheels are operable to set positions for a selected one of the six axes of controlled devices. Typically, one set of axis positions for a press cycle is entered, and then the next set, until all six axes have been entered.

Associated with each of the thumbwheel arrangements are displays including a display 109 for press position, motion/skew display 114, and device position display 112. As illustrated, a series of points such as for the x axis of the unloader 22 (Figures 1 to 6) are being entered relative to angular press positions corresponding to each point. The motion/skew control and indication is for the type of motion to move from one point to another.

For example, the previously entered device position information is shown in the displays 109, 114 and 112. The press position display 109 indicates that the previously entered device position was at a press position of 187°, (with 0° corresponding to top dead centre for the press drive). The display 112 indicates a device position such as 13.159 inches from a rest or home position for the unloader in the x direction. The type of motion used to reach this position is indicated as skewed ; that is, having different velocities at the beginning and end of the path travelled. The type of skew is indicated as beginning skew, meaning that the device is programmed to move more rapidly at the beginning of travel than at the end.

The next point to be programmed is at 50° of press rotation as indicated by the thumbwheel arrangement 108, and the position as selected on the thumbwheels 111 is 48 inches. The type of motion is again skewed with a beginning skew as shown in the thumbwheel arrangement 113. A device position on/off switch for the thumbwheels in the "on" position allows the thumbwheels to be used for entering motion path input data. A data input receptacle 117 allows the use of a peripheral device such as a cassette or paper tape reader to be used for loading the motion paths for the axes without entering individual points through the thumbwheels.

In a function/operation section of the control panel, the lower portion thereof, there is included a device select switch 118 which selects the transfer device for which data is to be entered or displayed. A function select switch 119 cooperates with the device select switch to determine a particular axis for which data is to be entered or displayed. On the function select switch, the horizontal setting selects the horizontal axis of a device selected by the device select switch 118. This setting is operable in both the set up and data display modes of operation for entering or displaying motion data for the selected axis. The vertical setting for the switch 119 is similar to the horizontal position except it is concerned with the vertical axis of the loader or unloader. The lifter up setting calls for a "lifter up" condition for the press, which would be entered by setting the press position thumbwheels 108 when the switch 119 is in the lifter up position. Similarly, the jaw open and jaw close positions are set by the thumbwheels 108 for particular press angular positions for the device selected by the device select switch 118.

The home position for the switch 119 causes the horizontal or rotary function of the selected axis device to perform a seeking movement to its home position. The other home (vert) switch setting causes the vertical axis of the selected device to move to its home position. The data read setting of the switch 119 permits the loading of a motion path profile from a peripheral device such as a tape or casette reader through the input receptacle 117. The data write position permits writing the contents of the motion path coordinates from the computer onto a peripheral device such as cassette or tape.

A clear data pushbutton 121 clears the current contents of input data and motion path profile information for the device selected by the switch 118. This pushbutton 121 is active when the mode switch 122 is in the set up mode. In the press test mode, the switch 122 permits operation of the individual press and its devices separate from the press line. In the device test mode, the device motion path may be executed for selected devices without operation of the press. The set up mode is used for jogging a selected device or entering motion path data for that device. The data display setting for the switch 122 operates in conjunction with the device select switch 118 to cause the current input data for the selected device function to be displayed by the press position display 119, motion/skew display 114 and device position display 112. The enter/display data pushbutton 123 is used to effect the entry of data for the execution of a selected axis function. When the switch 122 is in the data display mode, pushing the button 123 places the current data in the displays 109, 114 and 112.

A three position retract/position switch 124 permits the selected device to be retracted to its home position or moved to the synchronized path position. The action is initiated by a pushbutton 126. A feedrate override switch 127 controls the rate of motion of the transfer devices along their synchronized paths when in the device test mode as selected by switch 122. The feed rate percentages vary from 0 to 100%, with 100% being the rated device speed. The pushbutton 128 activates power to all axes of the control devices. A load data pushbutton 129 initiates the set up computations of a motion path profile to be placed in a table for the selected device. An emergency stop switch 131 stops the press and all devices and removes power from all axes.

Typically, to enter the necessary axis position information through the control panel 43 for the computer 30, a few desired transfer mechanism positions are entered with corresponding press cycle positions. Each of the six axes of position information is separately entered. Thus, for example, it might be desired to have the jaws of the unloader mechanism inside the working area of the press at a press position of 270°, at a position for loading a workpiece onto the output conveyor at 10°, and dwelling in a retracted position from 50° to 270°. The x axis positions for the unloader device in combination with the corresponding press positions are then entered through the control panel 43. Additionally, the type of motion and skew, if any, for arriving at each device position is entered. After all of the x axis position information is entered, the data is loaded to form a motion table for the x axis of the unloader. Then a similar sequence is followed for entering the vertical axis position information, which is then also loaded into the computer 30. The points in the press cycle at which the jaws are to be opened and closed are also entered through the control panel 43. Similarly, the loader positions, conveyor positions, turnover device positions, and lifter up command signal are entered through the control panel for the appropriate press positions.

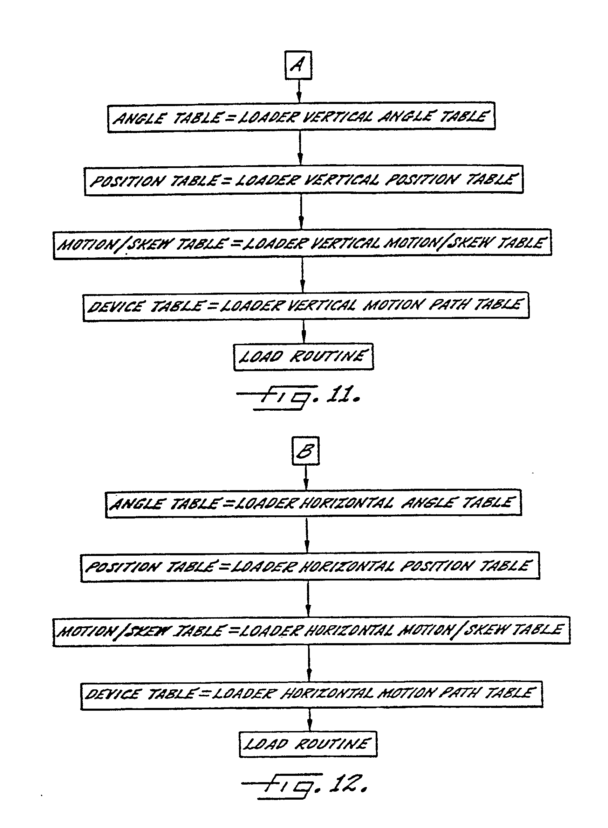

The operation of the computer 30 in co-ordination with the control panel 43 for loading and processing device position information shall now be described in conjunction with exemplary flow charts. With initial reference to Figure 8, at the start of the procedure for loading data, either the thumbwheels may be used for manual entry of device position information as indicated in the left branch of Figure 8, or the data may be directly read, such as from a cassette or paper tape as represented by the right branch. If data is to be coupled directly through the control panel to the computer such as from a cassette, the input is made through the receptacle 117 (Figure 7) and the tabular data, to be described in more detail hereinafter, is directly read from the cassette. At such time the function select switch 119 is set to the data read setting.

For the manual entry of data, each function such as the horizontal or vertical axis of the unloader, as set by the switch 119, for each device as set by the switch 118, is set and the clear data button 121 pushed to clear all of the data from an input data table and a motion path table, forming a portion of the internal computer memory. The input data table contains the specific points with their corresponding press positions for the various axes of the various devices which are entered through the thumbwheels on the control panel 43. After these values are entered, the load data button 129 is depressed and the motion path table is derived from the input data table values for each axis. Subsequently, the positions of the devices with the corresponding press positions may be displayed, a device test sequence may be executed, and the press subsequently run, in conjunction with the controlled devices. The loaded data may also be punched onto a paper tape through a connection at the data input/output receptable 117 with the function select switch in the data read position.

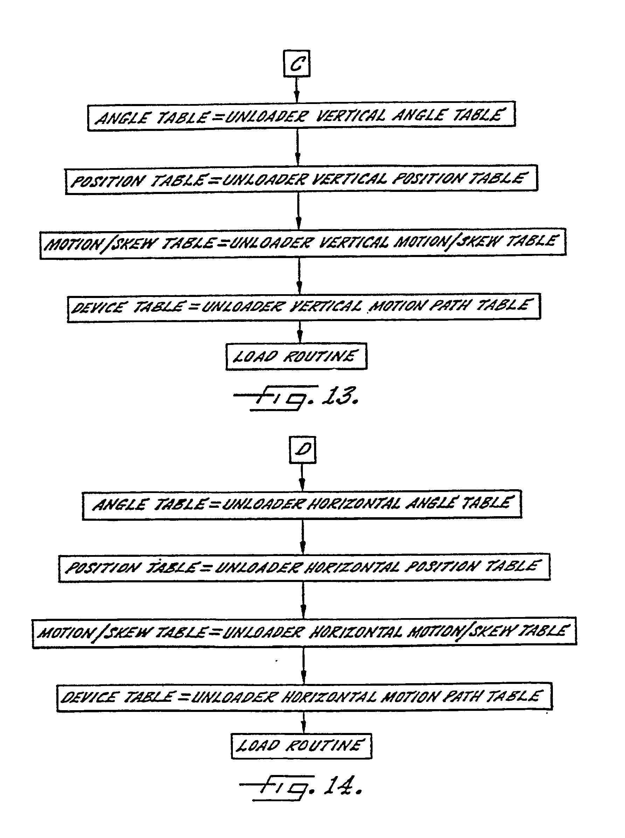

The form of the input data table is shown in Figure 9, such as for either of the horizontal or vertical axes of the loader or unloader. The tables for the conveyor and turnover device are similar, and simplified tables showing the press angle for activation of the jaws of the loader and unloader and of a lifter are provided.

The data to be entered in the input data table is an arrangement of position locations for an axis of a device identified by press angles. Typically, several desired locations for each one of the devices such as the unloader are selected. These might be, for the unloader, a position inside the press after a press operation, a position for depositing the workpiece on the conveyor, and a dwell position away from the conveyor and press during a press operation. A horizontal and a vertical position relative to a rest or zero position would be provided for each of these desired points for the unloader. If the table of Figure 9 were for the x axis of the unloader, the discrete desired x axis positions would each be identified by a line in the table. In that row of information, the angle is the press angle, the position is the x axis horizontal position for the unloader, the motion column entry is for the type of motion used to arrive at that position, and the skew column contains the type of skew; if any, of the motion in arriving at that position. In order to enter each line of information, the device select switch 118 and the function select switch 119 of the control panel 43 are placed at each of the different axis positions and the information for each point for that axis entered on the thumbwheels 108, 111 and 113. When the desired line of information for the selected device is on the thumbwheels, the enter/display data button 123 is depressed to enter the data into the input data table.

As indicated in the flow chart of Figure 8, after all of the desired data has been entered into the input data table, the load data button 129 is depressed to actuate the computer to process the lines of data in the input data tables into a 500 line motion path table. In order to do this, the computer executes a load data sub-routine associated with each of the axes.

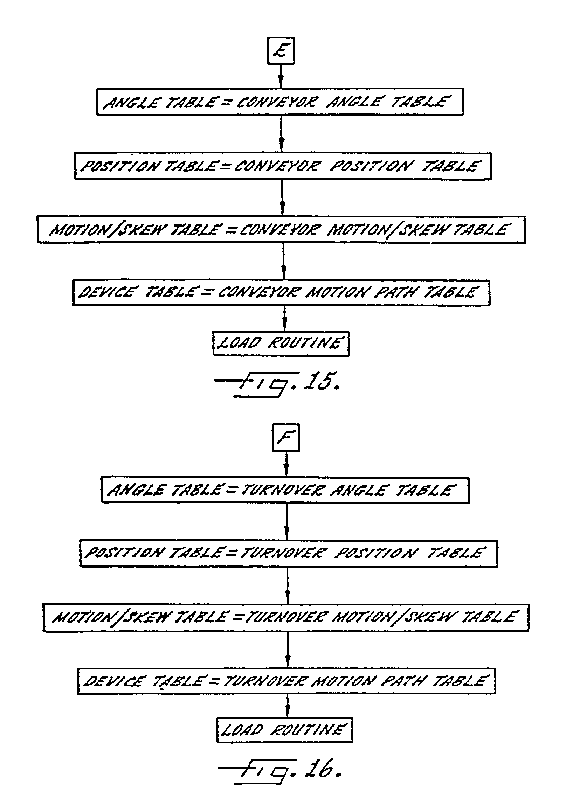

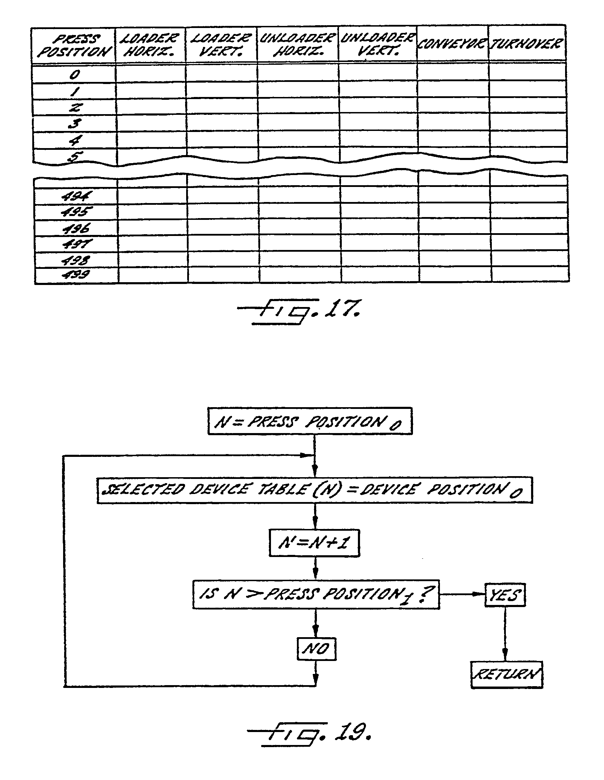

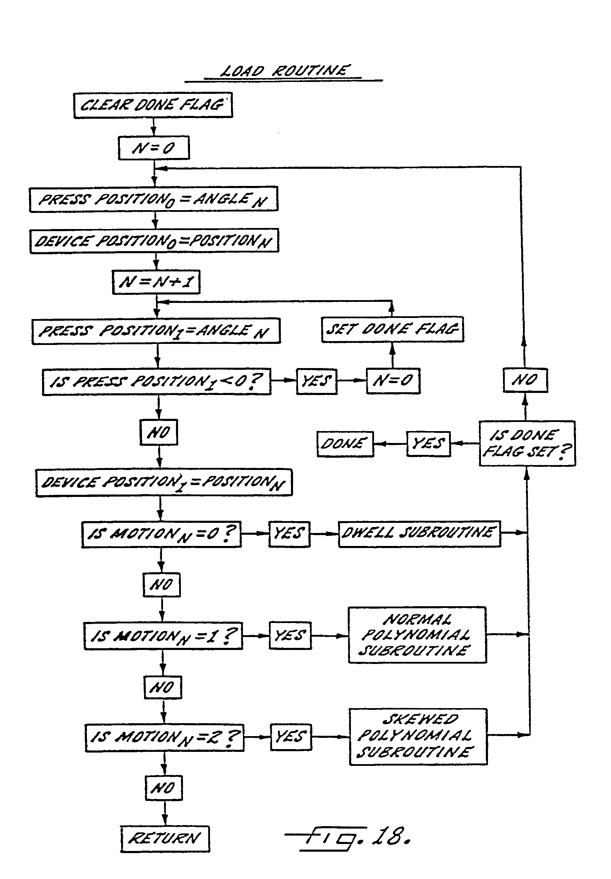

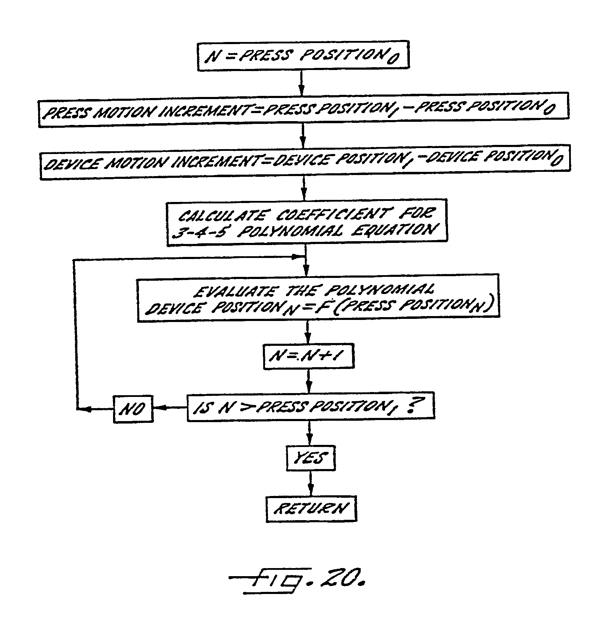

As shown in Figure 10, when the load data button is depressed, the computer checks the settings of the device and function select switches to determine for which axis input data is to be processed into the motion path table. The computer then selects the appropriate tables and table sections from the various axes of input data tables and the appropriate portion of the motion path table. For example, if the horizontal axis of the unloader has been selected when the load data button is depressed, the steps followed by the computer are as shown in Figure 13. The angle table column, position table column, motion and skew table columns from the unloader vertical axis input data table are placed in an operable position for use by the computer in executing a load routine. Similarly, the portion of the motion path table for the unloader vertical axis device is accessed for entering the calculated vertical motion values.

Figure 17 illustrates the motion path table, wherein one press cycle is divided into 500 equally spaced press positions. A position value for each of the six axes is calculated through each of the load routines to provide a location for each device axis corresponding to each of the 500 press positions.

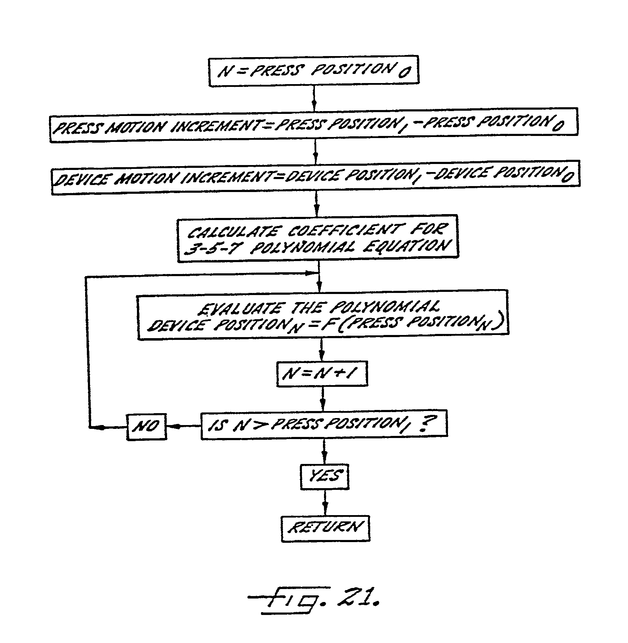

The load routine for each axis is illustrated in Figure 18. This load routine is entered from each of the subroutines of Figures 11 to 16. When entering the load routine, the computer first clears a done flag and begins by setting the first position identifier N equal to zero. Taking, for example, moving to the load routine of Fig. 18 from the unloader vertical axis routine of Figure 13, the computer first selects the first, or 0, press position angle from the unloader vertical angle table. The computer then also reads the corresponding device position for this angle.

Since the motion and skew associated with the first press angle and device axis position are concerned with the motion and skew for arriving at that position, the computer then increments to the next, N plus 1, line on the vertical unloader table. The computer then reads the second press position angle from the unloader vertical position table. It will be recalled from Fig. 8, that when data is cleared, the input data table and the motion path table are cleared. When the input data table is cleared, all of the values in the different locations are set to negative numbers. Therefore, in the next step in Fig. 18, the computer determines if the next press position angle is less than 0. If it is, then N is set equal to 0 and the done flag is set. In the present example, for the moment, we will presume that the press position is not a negative number. Then the computer reads out a new device position corresponding to the justread press position.

At this point, the latest-read press and device positions are designated position 1. The previously read press and device positions are read as positions 0. The motion and skew information to be utilized is that motion and skew associated with the press and device positions 1. The computer then determines which type of motion, has been called for, dwell, normal or skewed. If none of these types of motion are called for, the computer exits from the routine because there has been an error. If one of the three types of motion has been read from the motion/skew table, the appropriate subroutine, to be described hereinafter is executed. In these subroutines, the actual unloader vertical values for the motion table are caculated.

After a particular subroutine is executed, the computer determines if the done flag has been set. If it has, the load routine is finished and the computer exits from the routine. If the done flag is not set the computer returns to the beginning of the routine to read the next press and device positions.

In order to set the done flag, the incremented, N plus 1, press position must be read as being a negative number; that is, meaning that there is no further position information to be obtained from the table. If this is the case, n is reset to 0 and the done flag is set. As can be seen from the flow chart, the computer returns to the first press and device positions, positions 0, which remain the same as originally, and the press, device, and motion/skew values are now those of the initial entry in the input data table. This is necessary since the end point of the cycle of positions for a device axis is the same as the beginning point. Figures 19, 10 and 21 show the dwell, normal and skewed motion subroutines, respectively.

In executing the dwell subroutine, illustrated in Fig. 19, the computer determines a press position line of the motion path table, 0 to 499, corresponding to the first press position, press position 0 from the load routine. This is a matter of converting from the notation of 360° for one press drive rotation to 500 equal segments per rotation as used in the motion path table of Fig. 17. Next, the computer places the initial device position, device position 0 from the load routine, in the motion path table on the line of the table corresponding to press position 0 as translated to five-hundredths of a press cycle from the previous step.

The computer then increments to the next line in the motion path table and checks to see if this position is beyond the end position for the dwell segment. The press position 1, the second press position from the load routine Fig. 18, as converted from degrees to the appropriate motion path table line, is the end of the dwell segment. If the line reached in the table is beyond the end of the dwell segment, the computer returns to the load routine. If the line reached in the motion path table is not beyond the end of the dwell segment, the computer returns to write the same device position in this next line on the motion path table.

In Fig. 20, the normal motion subroutine is illustrated. In this case, the beginning press position in the motion path table is selected as before. The computer then determines a press motion increment, which is the difference between the start and end positions, position 1 minus position 0 from Fig. 18. Similarly, a device motion increment is determined by subtracting the end point positions, device position 1 minus device position 0. Based upon the press angle increment and the device position change increment, the computer calculates the coefficients for a three-four-five polynomial equation to plot the motion of the particular device axis over the interval.

While various motions are possible in moving over the interval, the polynomial equation selected is based upon cam design principles, with the form being as follows :

$$y = a - bx^3 + cx^4 - dx^5$$

Such cam design equations may be found discussed in various texts such as *Cams* by Harold A. Rothbart, John Wiley & Sons, 1956.

After the coefficients for a polynomial equation are calculated based upon the entire interval, the polynomial is evaluated for the first press position and the calculated device position is placed in the appropriate column of the motion path table on the line for the corresponding press position. The press position is then incremented by one. If this press position is greater than the press position, at the end of the motion segment, press position 1 from Fig. 18, then the computer returns to the load routine. Otherwise, the polynomial is evaluated for the next press position and the device position inserted in the table.

The skewed polynomial subroutine of Fig. 21 shall not be described in detail since it is substantially the same as the normal polynomial subroutine of Fig. 20 except that the polynomial equation differs from the motion equation of the normal subroutine. For the skewed motion, a beginning skew or an ending skew is determined based upon the information from the input data table for the motion interval. The skewed equation results in either faster motion at the beginning of the interval or faster motion at the end of the interval for the particular device axis involved.

Once the load routine of Fig. 18 has been executed, including all of its various subroutines, for each of the six axes, the motion path table of Fig. 17 is completed. In addition, in another memory location, the jaw open and close commands and the lifter commands are stored with an associated press position. When the press and control are tested, the computer steps through the press positions, 0 to 499, and acts through the previously described servo loops to maintain each of the six device axes at the tabular positions.

In the illustrated system, the commands to the servo amplifiers are updated as follows. The press is presumed to operate at a basic rate of 16 strokes per minute. The basic clock rate for the computer is set to have an interval between clock pulses of 1.5 milliseconds. The press position sensor provides 10,000 counts per press cycle. As illustrated above, the motion path table contains 500 blocks, or lines, or position information for each press cycle.

The above parameters result in there being 20 press feedback counts per line of the motion path table. This also means that there are four press feedback counts per clock cycle of the computer. Thus there are five clock cycles per block or line of the motion path table.

At each computer clock pulse, the counts from the press position feedback are checked by the computer. With the press operating at the basic 16 strokes per minute rate, there will be the basic four counts per clock cycle. Five of these clock cycles will occur each block, or line of the motion path table. An interpolation routine is performed to obtain desired axis locations at each of these clock cycles, the interpolation occurring between the lines of the motion path table. Through the interpolation, the computer is able to issue servo commands for each axis 5 times per block of data in the motion path table. An acceptable system of interpolation, as well as general techniques of device axis numerical control, is illustrated in US-A-3,941,987 and US-A-3,941,988, commonly assigned with the present application.

While the significant aspect of the actual generation of servo control signals is that the tabular values for the axes corresponding to the press positions are continuously utilized to control the device axes, the exact servo update routine is crucial. It should also be noted that using the illustrated system, in addition to the typical numerical control operations, the clock rate for the computer is adjusted, within a certain range, dependent upon the number of press feed-back counts received between clock pulses. In other words, the basic clock rate corresponding to 1.5 milliseconds between pulses will be speeded up if the press is operating faster than 16 strokes per minute, and the clock will be slowed if the press is slower than the basic strokes per minute. Thus, the system attempts to maintain the four press feed-back counts per clock cycle synchronization. If the press slows or speeds up beyond a pre-set limit, the number of counts from the press feed-back line per clock cycle are shifted, such as to either 2 or 5 counts per clock cycle. Further variation of the press speed operates to terminate operation of the press and/or the control axis devices.

In the exemplary system, the transfer mechanism axes associated with a particular press are controlled in accordance with the angular position of the press drive. In a synchronized press line system, with the press drives synchronized with one another, this results in total synchronization of the entire press line system with associated transfer mechanisms. The exact distribution of discrete computers for executing the control functions for transfer mechanisms is not critical, and the computing power for controlling the transfer mechanisms of two presses, for example, could be incorporated in a single control computer arrangement.

## Claims

1. A power press arrangement comprising a power press (11, 12) having a slide (17), a press drive for driving the slide (17) in a press cycle, a working area, a workpiece displacing mechanism having a control unit (30) and an element (21, 22) for moving a workpiece (W) during a press cycle relative to the working area of the press in response to operation of the control unit (30), means (38) for producing a timing signal representing successive increments of each press cycle, and a monitor (39) for monitoring the motion of the workpiece-moving element (21, 22), a memory which stores data relating to desired successive positions for the workpiece-moving element (21, 22) during a press cycle, characterised in that the control unit (30) includes a calculator for deriving, during each press cycle, from the data stored in the memory, theoretical motion parameters for the workpiece-moving element (21, 22) between successive desired positions, and a comparator compares the theoretical motion derived by the calculator with the motion monitored by the monitor and causes the control unit (30) to move the workpiece-moving element (21, 22) in dependence upon the results produced by the comparator, the memory correlating the output of said stored data relating to desired positions for the workpiece-moving element (21, 22) within a press cycle with different positions of the press drive and its associated slide so as to closely correlate the movement of the workpiece-moving element (21, 22) with the motion of the press drive.

2. An arrangement as claimed in claim 1, characterised in that said timing signal represents the actual position of the press drive.

3. An arrangement as claimed in claim 1 or 2, characterised by a receiver for receiving discrete position data for the workpiece-moving element (45) correlated with discrete positions being less than those stored in the memory, and a processing unit for deriving intermediate positions of said element for entering into the memory between said discrete positions.

4. An arrangement as claimed in any one of the preceding claims, characterised in that the workpiece-moving element (45) is a pair of gripping jaws.

5. An arrangement as claimed in any one of the preceding claims, characterised in that the workpiece-displacing mechanism (21, 22) has a carrier (53) supporting the said element (45) for vertical movement and in that the carrier (53) is, in turn, mounted for horizontal movement on a support element (54) secured to a stationary portion (52) of the power press.

6. An arrangement as claimed in any one of the preceding claims, characterised in that the horizontal and vertical motions of said element (45) are separately monitored by the monitor (39), separately stored in the memory, separately derived by the calculator, separately compared by the comparator, and separately controlled by the control unit (32 to 37).

7. A press line for performing a series of press operations on a workpiece, comprising a series of power press arrangements each as claimed in any one of the preceding claims, characterised by a co-ordinator for incrementally co-ordinating the motion of the elements of different power press arrangements in the power press line.

8. A power press line as claimed in claim 7, wherein the co-ordinator includes a synchronizing circuit for synchronizing each of the power press drives.

9. A method of synchronizing the operation of auxiliary apparatus including loaders, unloaders and conveyors with each of the press drives of a line of successive power presses comprising the steps of deriving a set of auxiliary apparatus position values for a cycle of a press drive, driving the press, continuously monitoring the position of the auxiliary apparatus and displacing the auxiliary apparatus in theoretical positions based upon the deviation between theoretical and actual auxiliary apparatus position values, characterised in that the position of the press drive is incrementally to determined and correlated with the derived auxiliary apparatus positions incrementally to determine the theoretical auxiliary positions, and in that the auxiliary apparatus position values are incremental.

10. A method according to claim 9, characterised by the steps of entering several discrete position locations corresponding to said auxiliary apparatus positions at specific points during a press drive cycle, deriving a larger table of points for positions of the auxiliary apparatus in correspondence to press drive positions to form a table of auxiliary apparatus values, driving the press, and positioning the auxiliary apparatus based upon said table of values during each cycle of press drive operation.

## Ansprüche

1. Eine Pressenanordnung, welche eine Presse (11, 12) mit einem Schlitten (17), einen Pressenantrieb zum Antreiben des Schlittens (17) in einem Preßzyklus, einen Arbeitsbereich, einen Werkstückverschiebemechanismus mit einer Steuereinheit (30) und einem Element (21, 22) zum Bewegen eines Werkstückes (W) während eines Preßzyklus relativ zu dem Arbeitsbereich der Presse in Reaktion auf die Wirkung der Steuereinheit (30), eine Einrichtung (38) zum Erzeugen eines Zeitgabesignales, welches aufeinanderfolgende Inkrementierungen jedes Preßzyklus repräsentiert, und einen Monitor (39) zum Überwachen der Bewegung des Werkstückbewegungselementes (21, 22), einen Speicher, welcher Daten speichert, die sich auf gewünschte aufeinanderfolgende Positionen für das Werkstückbewegungselement (21, 22) während eines Preßzyklus beziehen, umfaßt, dadurch gekennzeichnet, daß die Steuereinheit (30) einen Rechner zum Ableiten, während jedes Preßzyklus, aus den Daten in dem Speicher, theroretischer Bewegungsparameter für das Werkstückbewegungselement (21, 22) zwischen aufeinanderfolgenden gewünschten Positionen enthält, und daß ein Komparator die durch den Rechner abgeleitete theoretische Bewegung mit der Bewegung vergleicht, welche von dem Monitor überwacht wird, und die Steuereinheit (30) veranlaßt, das Werkstückbewegungselment (21, 22) in Abhängigkeit von den Resultaten, die von dem Komparator erzeugt werden, zu bewegen, wobei der Speicher die Ausgabe der gespeicherten Daten, die sich auf gewünschte Positionen für das Werkstückbewegungselment (21, 22) imerhalb eines Preßzyklus beziehen, mit unterschiedlichen Positionen des Pressenantriebes und seines zugehörigen Schlittens in Korrelation bringt, um so die Bewegung des Werkstückbewegungselmentes (21, 22) mit der Bewegung des Pressenantriebes eng in Korrelation zu bringen.

2. Anordnung nach Anspruch 1, **dadurch gekennzeichnet,** daß das Zeitgabesignal die augenblickliche Position des Pressenantriebes repräsentiert.

3. Anordnung nach Anspruch 1 oder 2, **gekennzeichnet durch** einen Empfänger zum Aufnehmen diskreter Positionsdaten für das das Werkstück bewegende Bauteil (45), die mit diskreten Positionen korreliert sind, die geringer als jene im Speicher gespeicherten sind, und durch eine Prozessoreinheit zum Ableiten von Zwischenpositionen des Bauteiles zum Eingeben in den Speicher zwischen den genannten diskreten Positionen.

4. Anordnung nach einem der vorhergehenden Ansprüche, **dadurch gekennzeichnet,** daß das das Werkstück bewegende Bauteil (45) ein Paar Greifbacken aufweist.

5. Anordnung nach einem der vorhergehenden Ansprüche, **dadurch gekennzeichnet,** daß der Werkstückverschiebemechanismus (21, 22) einen Träger aufweist, der das Bauteil (45) für die vertikale Bewegung hält, und daß der Träger (53) seinerseits für die horizontale Bewegung an einem Tragelement (54) montiert ist, das an einem stationären Teil (52) der Presse befestigt ist.

6. Anordnung nach einem der vorhergehenden Ansprüche, **dadurch gekennzeichnet,** daß die Horizontal- und Vertikalbewgungen des Bauteiles (45) von dem Monitor (39) getrennt überwacht, in dem Speicher getrennt gespeichert, von dem Rechner getrennt abgeleitet, von dem Komparator getrennt verglichen und von der Steuereinheit (32-37) getrennt beeinflußt werden.

7. Pressenstraße zur Ausfürung einer Folge von Preßvorgängen an einem Werkstück, enthaltend eine Folge von Pressenanordnungen jeweils nach einem der vorhergehenden Ansprüche, **gekennzeichnet durch** einen Koordinator zum inkrementellen Koordinieren der Bewegung der Bauteile der verschiedenen Pressenanordnungen in der Pressenstraße.

8. Pressenstraße nach Anspruch 7, bei der der Koordinator einen Synchronisierkreis zum Synchronisieren eines jeder der Pressenantriebe aufweist.

9. Verfahren zum Synchronisieren des Betriebes eines Hilfsgerätes, enthaltend Ladeeinrichtungen, Entladeeinrichtungen und Förderer, mit jedem der Pressenantriebe einer Straße aufeinanderfolgender Pressen, enthaltend die Schritte des Ableitens eines Satzes von Hilfsvorrichtungspositionswerten für einen Zyklus eines Pressenantriebes, Antreiben der Presse, fortlaufendes Überwachen der Position der Hilfsvorrichtung und Verstellen der Hilfsvorrichtung in theoretischen Positionen auf der Grundlage der Abweichung zwischen theoretischen und augenblicklichen Hilfsvorrichtungspositionswerten, **dadurch gekennzeichnet,** daß die Position des Pressenantriebes inkrementell bestimmt und mit den abgeleiteten Hilfsvorrichtungspositionen inkrementell korreliert wird, um die theoretischen Hilfspositionen zu bestimmen, und daß die Hilfsvorrichtungspositionswerte inkrementell sind.

10. Verfahren nach Anspruch 9, **gekennzeichnet durch** die Schritte : Eingeben mehrerer diskreter Positionsstellen entsprechend den Hilfsvorrichtungspositionen an spezifischen Punkten während eines Pressenantriebszyklus, Ableiten einer größeren Tabelle von Punkten für Positionen der Hilfsvorrichtung entsprechend Pressenantriebspositionen, um eine Tabelle von Hilfsvorrichtungswerten zu bilden, Antreiben der Presse und Positionieren der Hilfsvorrichtung auf der Grundlage jener Wertetabelle während jedes Zyklus des Pressenantriebsbetriebes.

## Revendications

1. Arrangement de presses mécaniques comprenant une presse mécanique (11, 12) ayant un chariot (17), un dispositif d'entraînement de la presse pour entraîner le chariot (17) dans un cycle de la presse, une zone de travail, un mécanisme de déplacement de pièces ayant une unité de commande (30) et un élément (21, 22) destiné à déplacer une pièce (W) pendant un cycle de la presse par rapport à la zone de travail de la presse à la suite du fonctionnement de l'unité de commande (30), un dispositif (38) destiné à créer un signal de rythme représentant des éléments successifs de chaque cycle de la presse, et un moniteur (39) destiné à contrôler le déplacement de l'élément (21, 22) de déplacement de pièce, une mémoire qui conserve des données relatives aux positions successives voulues pour l'élément (21, 22) de déplacement de pièce pendant un cycle de la presse, caractérisé en ce que l'unité de commande (30) comprend un calculateur destiné à former, pendant chaque cycle de la presse, à l'aide des données conservées dans la mémoire, des paramètres d'un mouvement théorique pour l'élément (21, 22) de déplacement de pièce entre des positions successives souhaitées, et un comparateur comparant le mouvement théorique formé par le calculateur avec le mouvement contrôlé par le moniteur et amenant l'unité de commande (30) à déplacer l'élément (21, 22) de déplacement de pièce en fonction des résultats donnés par le comparateur, la mémoire effectuant une corrélation entre la sortie des données mémorisées relatives aux positions voulues pour l'élément (21, 22) de déplacement de pièce dans un cycle de la presse et différentes positions du dispositif d'entraînement de la presse et de son chariot associé afin que le déplacement de l'élément (21, 22) de déplacement de pièce soit étroitement corrélé au mouvement du dispositif d'entraînement de la presse.

2. Arrangement selon la revendication 1, caractérisé en ce que le signal de synchronisation représente la position réelle du dispositif d'entraînement de la presse.

3. Arrangement selon l'une des revendications 1 et 2, caractérisé par un récepteur destiné à recevoir des données séparées de position pour l'élément (45) de déplacement de pièce, corrélées à des positions séparées qui sont inférieures à celles qui sont conservées dans la mémoire, et une unité de traitement destinée a former des positions intermédiaires dudit élément afin qu'elles soient introduites dans la mémoire entre lesdites positions séparées.

4. Arrangement selon l'une quelconque des revendications précédentes, caractérisé en ce que l'élément de déplacement de pièce (45) est formé par une paire de mâchoires de serrage.

5. Arrangement selon l'une quelconque des revendications précédentes, caractérisé en ce que le mécanisme (21, 22) de déplacement de pièce a un support (53) portant ledit élément (45) afin qu'il se déplace verticalement, et en ce que le support (53) est lui-même monté afin qu'il se déplace horizontalement sur un élément de support (54) fixé à une partie fixe (52) de la presse mécanique.

6. Arrangement selon l'une quelconque des revendications précédentes, caractérisé en ce que les mouvements horizontaux et verticaux dudit élément (45) sont contrôlés séparément par le moniteur (39), sont mémorisés séparément dans la mémoire, sont formés séparément par le calculateur, sont comparés séparément par le comparateur, et sont commandés séparément par l'unité de commande (32 à 37).

7. Ligne de presses destinées à exécuter une série d'opérations sur une pièce, comprenant une série d'arrangements de presses mécaniques qui sont chacun selon l'une quelconque des revendications précédentes, caractérisée par un dispositif de coordination progressive du mouvement des différents arrangements de presses mécaniques, dans la ligne de presses mécaniques.

8. Ligne de presses mécaniques selon la revendication 7, dans laquelle le dispositif de coordination comprend un circuit de synchronisation de tous les dispositifs d'entraînement de presses mécaniques.

9. Procédé de synchronisation du fonctionnement d'un appareil auxiliaire comprenant des dispositifs de chargement, de déchargement et des transporteurs sur chacun des dispositifs d'entraînement d'une ligne de presses mécaniques successives, comprenant des étapes de formation d'un jeu de valeurs de positions d'appareil auxiliaire pour un cycle d'un dispositif d'entraînement de la presse, d'entraînement de la presse, de contrôle continu de la position de l'appareil auxiliaire et de déplacement de l'appareil auxiliaire à des positions théoriques qui dépendent de l'écart entre des valeurs théoriques et réelles de positions de l'appareil auxiliaire, caractérisé en ce que la position du dispositif d'entraînement de la pièce est déterminée progressivement et est corrélée aux positions de l'appareil auxiliaire qui sont formées progressivement afin que les positions théoriques de l'appareil auxiliaire soient déterminées, et les valeurs des positions des appareils auxiliaires sont progressives.

10. Procédé selon la revendication 9, caractérisé en ce qu'il comprend l'introduction de plusieurs emplacements séparés de position correspondant aux positions de l'appareil auxiliaire en des points particuliers d'un cycle d'entraînement de la presse, la formation d'une plus grande table de points correspondant aux positions de l'appareil auxiliaire qui correspondent aux positions du dispositif d'entraînement de la presse afin qu'une table des valeurs de l'appareil auxiliaire soit formée, l'entraînement de la presse, et le positionnement de l'appareil auxiliaire d'après la table de valeurs à chaque cycle de fonctionnement du dispositif d'entraînement de la presse.

Fig. 2.

Fig. 1.

*38*
*39*

PRESS DRIVE POSITION SENSOR

AXIS POSITION SENSORS

*6*

*6*

*41*
*30*
*31*
*32-37*

POWER SUPPLIES

COMPUTER

SERVO DRIVE AMPLIFIERS

SERVO DRIVE MOTORS

*6*
*6*

*42*
*2*

*43*
CONTROL PANEL

JAW CYLINDERS
*45*

fig. 12.

Fig.3.

Fig.4.

_fig.5._

_fig.6._

Fig. 7.

DATA ERROR 101 (R)    DATA READY 102 (G)    EXCESS READY 103 (R)    DEVICE IN POSITION 104 (G)    SAFETY LIMIT 106 (R)    PRESS OUT OF POSITION 107 (R)

PRESS POSITION
187
109
050
148

MOTION / SKEW
0 DWELL
1 NORMAL (3-4-5)
2 SKEWED (5-5-7)
21
114
0 NONE
1 BEGINNING
2 ENDING
21
113

DEVICE POSITION
13159
112
48000
111

DATA INPUT/OUTPUT
117
THUMBWHEELS
OFF    ON
116

CLEAR DATA 121
PRESS CYCLE STOP

MODE
DEVICE TEST
PRESS TEST    SETUP
AUTO    DATA DISPLAY
122

DEVICE SELECT
LOADER    UNLOADER
TURNOVER    CONVEYOR
118

FUNCTION SELECT
JAW OPEN    JAW CLOSED    HOME (HOR/ROT)
LIFTER UP    HOME (VERT)
VERT.    DATA READ
HORIZ.    DATA WRITE
119
ENTER / DISPLAY DATA
123

RETRACT/POSITION
OFF
RETRACT    POSITION
124
INITIATE
126

FEEDRATE OVERRIDE
40 50 60
30    70
20    80
10    90
0    100
127
AXES ON
128

LOAD DATA
129
EMERGENCY STOP
131

43

EP 0 047 056 B2

17

Fig. 8.

| ANGLE | POSITION | MOTION | SKEW |
|---|---|---|---|
| | | | |
| | | | |
| | | | |

Fig. 9.

```
 ┌─────────────┐                      ┌─────────────┐
 │  LOAD DATA  │                      │ IS VERTICAL │   ┌─────┐   ┌───┐
 │ IS PRESSED  │                      │  SELECTED?  │──▶│ YES │──▶│ A │
 └─────────────┘                      └─────────────┘   └─────┘   └───┘
        │                                    │
        ▼                                    ▼
 ┌─────────────┐   ┌─────┐              ┌─────────┐
 │  IS LOADER  │──▶│ YES │──┐           │   NO    │
 │  SELECTED?  │   └─────┘  │           └─────────┘
 └─────────────┘            │                │
        │                   │                ▼
        ▼                   │        ┌───────────────┐
  ┌─────────┐               │        │ IS HORIZONTAL │  ┌─────┐  ┌───┐
  │   NO    │               │        │   SELECTED ?  │─▶│ YES │─▶│ B │
  └─────────┘               │        └───────────────┘  └─────┘  └───┘
        │                   │                │
        ▼                   │                ▼
 ┌─────────────┐  ┌─────┐   │          ┌─────────┐
 │ IS UNLOADER │─▶│ YES │───┘          │   NO    │
 │  SELECTED ? │  └─────┘              └─────────┘
 └─────────────┘                            │
        │                                   ▼
        ▼                             ┌──────────┐
  ┌─────────┐                         │  RETURN  │
  │   NO    │                         └──────────┘
  └─────────┘
        │
        ▼
 ┌─────────────┐  ┌─────┐  ┌───┐
 │ IS CONVEYOR │─▶│ YES │─▶│ E │
 │  SELECTED ? │  └─────┘  └───┘
 └─────────────┘
        │                        ┌─────────────┐
        ▼                        │ IS VERTICAL │  ┌─────┐  ┌───┐
  ┌─────────┐                    │  SELECTED ? │─▶│ YES │─▶│ C │
  │   NO    │                    └─────────────┘  └─────┘  └───┘
  └─────────┘                           │
        │                               ▼
        ▼                         ┌─────────┐
 ┌─────────────┐  ┌─────┐  ┌───┐  │   NO    │
 │ IS TURNOVER │─▶│ YES │─▶│ F │  └─────────┘
 │  SELECTED ? │  └─────┘  └───┘        │
 └─────────────┘                        ▼
        │                       ┌───────────────┐
        ▼                       │ IS HORIZONTAL │  ┌─────┐  ┌───┐
  ┌─────────┐                   │   SELECTED ?  │─▶│ YES │─▶│ D │
  │   NO    │                   └───────────────┘  └─────┘  └───┘
  └─────────┘                          │
        │                              ▼
        ▼                        ┌─────────┐
  ┌──────────┐                   │   NO    │
  │  RETURN  │                   └─────────┘
  └──────────┘                         │
                                       ▼
                                 ┌──────────┐
                                 │  RETURN  │
                                 └──────────┘
```

Fig. 10.

19

A

ANGLE TABLE = LOADER VERTICAL ANGLE TABLE

POSITION TABLE = LOADER VERTICAL POSITION TABLE

MOTION/SKEW TABLE = LOADER VERTICAL MOTION/SKEW TABLE

DEVICE TABLE = LOADER VERTICAL MOTION PATH TABLE

LOAD ROUTINE

Fig. 11.

B

ANGLE TABLE = LOADER HORIZONTAL ANGLE TABLE

POSITION TABLE = LOADER HORIZONTAL POSITION TABLE

MOTION/SKEW TABLE = LOADER HORIZONTAL MOTION/SKEW TABLE

DEVICE TABLE = LOADER HORIZONTAL MOTION PATH TABLE

LOAD ROUTINE

Fig. 12.

C

ANGLE TABLE = UNLOADER VERTICAL ANGLE TABLE

POSITION TABLE = UNLOADER VERTICAL POSITION TABLE

MOTION/SKEW TABLE = UNLOADER VERTICAL MOTION/SKEW TABLE

DEVICE TABLE = UNLOADER VERTICAL MOTION PATH TABLE

LOAD ROUTINE

Fig. 13.

D

ANGLE TABLE = UNLOADER HORIZONTAL ANGLE TABLE

POSITION TABLE = UNLOADER HORIZONTAL POSITION TABLE

MOTION/SKEW TABLE = UNLOADER HORIZONTAL MOTION/SKEW TABLE

DEVICE TABLE = UNLOADER HORIZONTAL MOTION PATH TABLE

LOAD ROUTINE

Fig. 14.

E

ANGLE TABLE = CONVEYOR ANGLE TABLE

POSITION TABLE = CONVEYOR POSITION TABLE

MOTION/SKEW TABLE = CONVEYOR MOTION/SKEW TABLE

DEVICE TABLE = CONVEYOR MOTION PATH TABLE

LOAD ROUTINE

Fig. 15.

F

ANGLE TABLE = TURNOVER ANGLE TABLE

POSITION TABLE = TURNOVER POSITION TABLE

MOTION/SKEW TABLE = TURNOVER MOTION/SKEW TABLE

DEVICE TABLE = TURNOVER MOTION PATH TABLE

LOAD ROUTINE

Fig. 16.

| PRESS POSITION | LOADER HORIZ. | LOADER VERT. | UNLOADER HORIZ. | UNLOADER VERT. | CONVEYOR | TURNOVER |
|---|---|---|---|---|---|---|
| 0 | | | | | | |
| 1 | | | | | | |
| 2 | | | | | | |
| 3 | | | | | | |
| 4 | | | | | | |
| 5 | | | | | | |
| 494 | | | | | | |
| 495 | | | | | | |
| 496 | | | | | | |
| 497 | | | | | | |
| 498 | | | | | | |
| 499 | | | | | | |

$$\text{Fig. 17.}$$

$$N = PRESS\ POSITION_0$$

$$SELECTED\ DEVICE\ TABLE\ (N) = DEVICE\ POSITION_0$$

$$N = N + 1$$

$$IS\ N > PRESS\ POSITION_1\ ?$$

YES

NO

RETURN

$$\text{Fig. 19.}$$

23

LOAD ROUTINE

CLEAR DONE FLAG

$N = 0$

PRESS POSITION$_0$ = ANGLE$_N$

DEVICE POSITION$_0$ = POSITION$_N$

$N = N + 1$

PRESS POSITION$_1$ = ANGLE$_N$   →   SET DONE FLAG

IS PRESS POSITION$_1$ < 0 ?   →   YES   →   $N = 0$

NO

DEVICE POSITION$_1$ = POSITION$_N$

IS MOTION$_N$ = 0 ?   →   YES   →   DWELL SUBROUTINE

NO

IS MOTION$_N$ = 1 ?   →   YES   →   NORMAL POLYNOMIAL SUBROUTINE

NO

IS MOTION$_N$ = 2 ?   →   YES   →   SKEWED POLYNOMIAL SUBROUTINE

NO

RETURN

NO

IS DONE FLAG SET ?

DONE   ←   YES

Fig. 18.

24

$$N = \text{PRESS POSITION}_0$$

$$\text{PRESS MOTION INCREMENT} = \text{PRESS POSITION}_1 - \text{PRESS POSITION}_0$$

$$\text{DEVICE MOTION INCREMENT} = \text{DEVICE POSITION}_1 - \text{DEVICE POSITION}_0$$

$$\text{CALCULATE COEFFICIENT FOR 3-4-5 POLYNOMIAL EQUATION}$$

$$\text{EVALUATE THE POLYNOMIAL}$$
$$\text{DEVICE POSITION}_N = F(\text{PRESS POSITION}_N)$$

$$N = N + 1$$

$$\text{IS } N > \text{PRESS POSITION}_1 \text{ ?}$$

NO

YES

RETURN

FIG. 20.

$N = PRESS\ POSITION_0$

$PRESS\ MOTION\ INCREMENT = PRESS\ POSITION_1 - PRESS\ POSITION_0$

$DEVICE\ MOTION\ INCREMENT = DEVICE\ POSITION_1 - DEVICE\ POSITION_0$

CALCULATE COEFFICIENT FOR
3-5-7 POLYNOMIAL EQUATION

EVALUATE THE POLYNOMIAL
$DEVICE\ POSITION_N = F(PRESS\ POSITION_N)$

$N = N + 1$

NO ← IS $N > PRESS\ POSITION_1$ ?

YES

RETURN

Fig. 21.